# EUROPÄISCHE PATENTANMELDUNG

(11) **EP 0 607 892 A1**
(43) Veröffentlichungstag der Anmeldung: **27.07.1994**
(21) Anmeldenummer: 94100560.5
(22) Anmeldetag: 17.01.1994
(51) Int. Cl.: B60B 9/26, B60B 9/28, B60G 11/00, B60B 9/02

(54) **Rad mit Eigenfederung, dessen Felge mit der Nabe durch mehrere von Federn stabilisierten Gelenkhebelsystemen verbunden ist für alle mit Rädern versehenen Gegenstände insbesondere Fahrzeuge**

(30) Priorität: 21.01.1993 DE 4301533
(71) Anmelder: Steffan, Thomas, D-55765 Birkenfeld (DE)
(72) Erfinder: Steffan, Thomas, D-55765 Birkenfeld (DE)
(74) Vertreter: Knoblauch, Ulrich, Dr.-Ing., Patentanwälte Dr. Knoblauch

(57) **Zusammenfassung**

Die bekannten Rädern mit Eigenfederung sind verschleißanfällig, aufwendig konstruiert, brechen zur Seite aus, erzeugen einen unerwünscht großen Schlupf oder haben einen geringen Federweg. Die Erfindung soll es ermöglichen eine Federung aus Gelenkhebelsystemen zwischen Nabe und Felge eines Rades so auszubilden, daß eine platzsparende, stabile, leichte und zugleich einfach zu konstruierende Vorrichtung entsteht.

Das federnde Rad besteht aus der Felge (1, 1') und der Nabe (2, 2'), wobei diese durch mehrere neuartige zweispeichige Gelenkhebelsysteme verbunden sind. Ein Gelenkhebelsystem besteht aus einem Gelenkhebelpaar (3, 3'), das an der Felge mit separaten Gelenken (5, 5'), und ein Gelenkhebelpaar (4, 4'), das an der Nabe mit separaten Gelenken (5, 5') befestigt ist. Das Gelenkhebelpaar an der Felge ist durch Gelenke (6, 6') mit dem Gelenkhebelpaar der Nabe verbunden und bildet ein sechseckiges Gelenkhebelsystem. Die Federn (7) in jedem Gelenkhebelsystem drücken das einzelne Gelenkhebelsystem auseinander. Mehrere dieser Gelenkhebelsysteme werden in regelmäßigen Abständen an Stelle der Speichen in den Zwischenraum zwischen Nabe und Felge gebracht und drehbar befestigt.

Es bedarf nur weniger Gelenkhebelsysteme, um eine stabile verschleißarme Federung zu ermöglichen. Bei Belastungen aller Art wirken alle Gelenkhebelsysteme dieser entgegen und geben die Felge in eine immer gleichmäßige Federbewegung frei. Unerwünschter Schlupf sowie erhöhte Reibungskräfte werden durch die Anordnung vermieden.

## Beschreibung

Die Erfindung betrifft ein Rad mit Eigenfederung, wobei der gesamte Federmechanismus im Bereich zwischen Nabe und Felge integriert ist. Eine derartige Erfindung ist von großem praktischem Interesse insbesondere für Fahrzeuge, denn sie ermöglicht die platzsparende Konstruktion gefederter Räder für alle denkbaren mit Rädern versehenen insbesondere fahrbaren Gegenstände, gleichgültig ob der fahrbare Gegenstand einen Eigenantrieb hat, gezogen, geschoben oder anderweitig bewegt wird.

Fahrzeugräder mit Eigenfederung bestehend aus Blatt- und Spiralfederkonstruktionen aber auch aus Gelenkhebelsystemen sind bereits bekannt. Manche Konstruktionen bestehen aus einseitig abgewinkelten Speichen, die in Spiralform oder in der Art von Spangen verspannt sind (US PS 34.782,875, 3.704.740, 1.831.297, 1.462.441, 1.389.938; DD PS 274.194, 274.195, 274.196, 274.197; DE PS 349.505). Die spangenartigen Speichen verformen sich und springen danach wieder in ihre Ausgangslage zurück. Der Federweg ist sehr gering. Das Ein- und Ausfedern erfolgt ruckartig. Die Konstruktionen brechen zur Seite aus oder erzeugen beim Brems- oder Beschleunigungsvorgang einen unerwünscht großenen Schlupf. Es sind auch solche Konstuktionen bekannt, die eine mehrfach gefederte Nabenaufhängungen aufweisen, wobei sich die Aufhängung nur durch die Art der Feder oder die Anbringung von Stabilisatoren zum Verhindern des seitlichen Ausbrechens unterscheidet (FR PS 888.315, 598.331, 575.213; GB PS 514.797, 232.417; US PS 2.048.575, 1.808.886, 1.741.344, 1.697.681, 1.623.656, 1.615.349, 1.453.786; DE PS 381.396). Diese Federungen weisen nur einen geringen Federweg auf und bestehen aus einer Vielzahl von das Gewicht erhöhenden Einzelteilen. Ferner ist eine federnde Radkonstruktion bekannt, die durch teilweise kreuzend angeordnete Gelenkhebelsysteme und Führungsschienen den unerwünschten Schlupf zu verhindern sucht (DE PS 464.543). Der Federweg ist hierbei jedoch sehr gering. Die Federung bedarf vieler einzelner und verschleißanfälliger Teile, da hier erhöhte Reibungskräfte auftreten. Bekannt sind auch Radkonstruktionen, die aus mehreren Gelenkhebelsystemen bestehen (US PS 1.569.046, DE PS 298.656, F PS 367.270). Die Konstruktionen sehen viele mechanische Einzelteile und Federn vor, erzeugen beim Brems- oder Beschleunigungsvorgang einen unerwünscht großenen Schlupf, sind labil und lassen nur kurze Federungsbewegungen zu. Diese Federungen haben ein hohes Eigengewicht und beanspruchen viel Platz.

Der Erfindung liegt im wesentlichen die Aufgabe zugrunde, eine aus Gelenkhebeln bestehende Federung zwischen Nabe und Felge eines beliebigen Rades so auszubilden, daß eine kompakte, stabile und zugleich einfach zu konstruierende Vorrichtung entsteht, die zudem ein geringes Eigengewicht aufweist.

Zur Lösung dieser Aufgabe werden nach dem Wesen der Erfindung mehrere neuartige Gelenkhebelsysteme in regelmäßigen Abständen in den Zwischenraum zwischen Nabe und Felge gebracht. Zur Konstruktion dieses zweispeichigen Gelenkhebelsystems werden sowohl an der Felgeninnenseite als auch an der Nabe zwei miteinander drehbar verbundene Gelenkhebelpaare mit axial drehbaren Gelenken an separaten Punkten befestigt, so daß im Ganzen nur sechs Gelenke und vier Gelenkhebel zu jedem sechseckigen Gelenkhebelsystem gehören. Innerhalb eines jeden Gelenkhebelsystems sind Federn angebracht, die die aus den Gelenkhebelpaaren bestehenden Verbindung zwischen Nabe und Felge auseinanderdrücken. Mehrere dieser Gelenkhebelsysteme werden an Stelle der Speichen eingefügt und bilden die mechanischen Federvorrichtungen des Rades. Alle Bauelemente sind schanierartig stabil miteinander verbunden. Die Federn der gesamten Gelenkhebelsysteme drücken diese auseinander und bewirken die Zentrierung des Rades.

Die mit der Erfindung erzielten Vorteile bestehen insbesondere darin, daß statt einer Vielzahl von das Eigengewicht des federnden Rades erhöhende Einzelteile wenige Gelenkhebelsysteme in das Rad gebracht werden müssen, die die Speichen ersetzen. Die Federung ist stabil und bricht nicht zur Seite aus. Bei Belastung wirken alle Gelenkhebelsysteme dieser Belastung entgegen und geben die Felge nicht ruckartig, sondern in eine immer gleichmäßige Federbewegung frei. Beim Überrollen von Hindernissen bewirkt die Federungskonstruktion einen gleichmäßigen Federungsablauf. Für das Federungsverhalten ist es gleichgültig aus welcher Fahrtrichtung Hindernisse auf die Felge treffen oder woher Belastungen auf die Nabe ausgeübt werden. Unerwünschter Schlupf durch Brems- oder Beschleunigungsvorgänge sowie erhöhte Reibungskräfte, die zu erhöhtem Verschleiß führen, werden von der Wechselwirkung der Gelenkhebelsysteme vermieden und lassen diese gleichmäßige Federbewegung fast unbeeinflußt. .

Eine vorteilhafte Ausgestaltung der Erfindung ist in Anspruch 2 angegeben. Die Weiterbildung nach Anspruch 2 gibt der Federkonstruktion auch bei extremer Beanspruchung mehr Halt, als dies bei Verwendung von Zugfedern der Fall wäre.

Ein Ausführungsbeispiel des Erfindungsgegenstandes ist in den Zeichnungen dargestellt und wird im folgenden näher beschrieben.

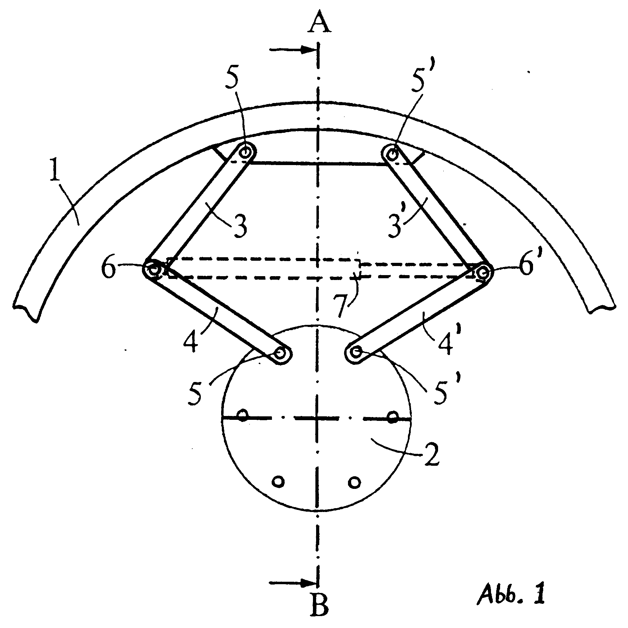

Abb. 1 zeigt die Anordnung eines Gelenkhebelsystems zwischen der in eine Ausschnitt dargestellten Felge und der Nabe,

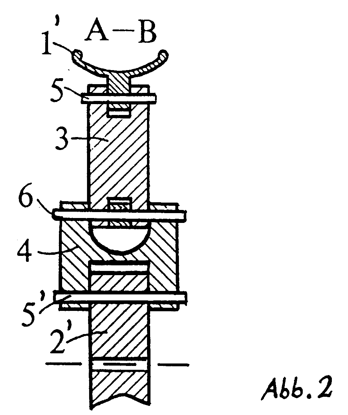

Abb. 2 stellt einen Schnitt nach der Linie A-B der Abb. 1 dar und
Abb. 3 bildet das vollständige Rad mit drei Gelenkhebelsystemen ab, wobei
Abb. 4 die Federwirkung beim Überrollen eines Hindernisses zeigt.

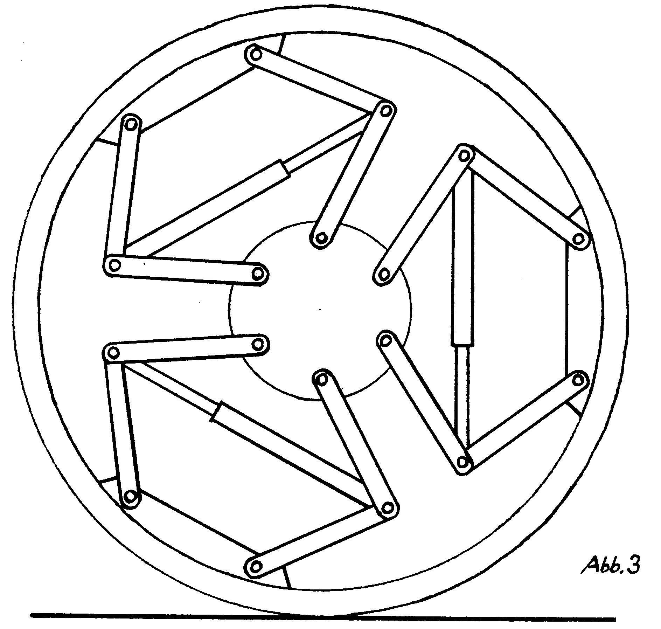

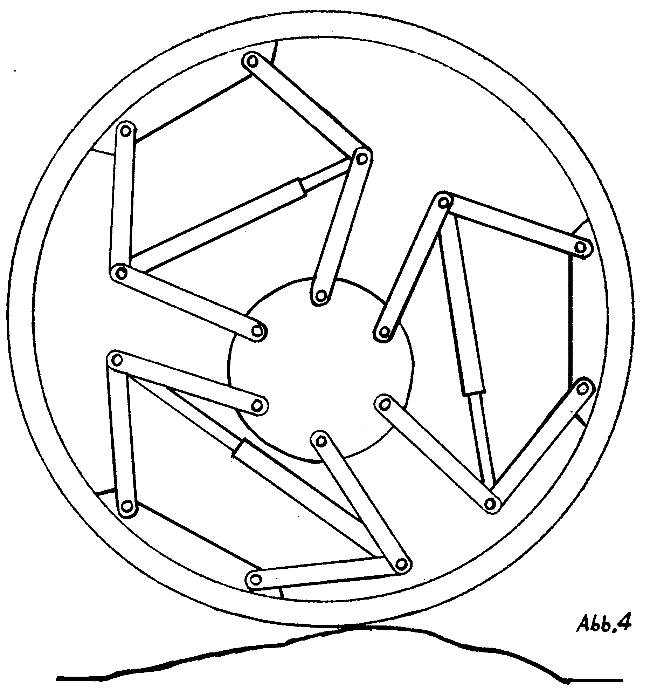

Das federnde Rad besteht aus der Felge (1, 1') und der Nabe (2, 2'), wobei diese durch mehrere zweispeichige Gelenkhebelsysteme verbunden sind (Abb. 3). Die Konstruktion und das Zusammenwirken dieser Gelenkhebelsysteme sind wesentlicher Teil der Erfindung. Ein Gelenkhebelsysteme besteht aus einem Gelenkhebelpaar (3, 3'), das an der Felge mit separaten Gelenken (5, 5'), und ein Gelenkhebelpaar (4, 4'), das an der Nabe mit separaten Gelenken (5, 5') drehbar befestigt ist. Das Gelenkhebelpaar an der Felge ist durch Gelenke (6, 6') mit dem Gelenkhebelpaar der Nabe drehbar verbunden, so daß ein sechseckiges Gelenkhebelsystem entsteht. Im Inneren des Gelenkhebelsystems sind Federn (7) befestigt, die das einzelne Gelenkhebelsysteme auseinanderdrücken. Mehrere dieser Gelenkhebelsysteme werden in regelmäßigen Abständen (Abb. 3) an Stelle der Speichen in den Zwischenraum zwischen Nabe und Felge gebracht und drehbar befestigt. In Normalstellung haben alle Gelenkhebelsysteme die gleiche Winkelstellung. Ohne und mit Belastung der Radnabe sowie - bei richtiger Einstellung des Federdrucks - mit Belastung neigt die gesamte Vorrichtung, sich zu zentrieren und bleibt daher stabil. Stößt das Rad auf ein Hindernis (Abb. 4), so werden die jeweiligen, dem Stoß am nächsten gelegenen und mit der Stoßrichtung verlaufende Gelenkhebelsysteme zusammengedrückt, während die im Rad dem Stoß gegenüberliegenden Gelenkhebelsysteme auseinandergezogen und somit in Stoßrichtung gestreckt werden. Dadurch gibt die Konstruktion die Bewegung des Rades kontrolliert in Stoßrichtung frei, während die Nabe bestrebt ist, stets auf gleichem Niveau zu bleiben.

## Patentansprüche

1. Rad mit Eigenfederung, dessen Felge mit der Nabe durch mehrere von Federn stabilisierten Gelenkhebelsystemen verbunden ist für alle mit Rädern versehenen Gegenstände insbesondere Fahrzeuge,
dadurch gekennzeichnet,
daß die jeweils an der Felgeninnenseite und an der Nabe schanierartig drehbar und jeweils getrennt voneinander an zwei Punkten (5, 5') befestigten Gelenkhebelpaare (3, 3', 4, 4') mit Gelenken (6, 6') drehbar verbunden werden, wobei an den so entstehenden sechseckigen Gelenkhebelsystemen Federn (7) angebracht sind.

2. Rad mit Eigenfederung nach Anspruch 1,
dadurch gekennzeichnet,
daß im Inneren eines sechseckigen Gelenkhebelsystems Druckfedern angebracht sind, die jedes Gelenkhebelsystem auseinanderdrücken.
